# EUROPÄISCHE PATENTSCHRIFT

(11) **EP 3 027 372 B1**
(45) Veröffentlichungstag und Bekanntmachung des Hinweises auf die Patenterteilung: **29.03.2017**
(21) Anmeldenummer: 14739428.2
(22) Anmeldetag: 15.07.2014
(51) Int. Cl.: B29C 33/00, B29C 70/48, B29C 70/54, F16J 15/02

(54) **WERKZEUG ZUR HERSTELLUNG VON FASERVERSTÄRKTEN KUNSTSTOFFBAUTEILEN IM INJEKTIONSPROZESS**
MOULD FOR THE MANUFACTURE OF FIBRE REINFORCED PLASTIC PARTS BY RESIN INJECTION
MOULE POUR LA FABRICATION DE PIÈCES EN PLASTIQUE RENFORCÉ EN FIBRES PAR INJECTION DE RÉSINE

(30) Priorität: 01.08.2013 DE 102013215113
(43) Veröffentlichungstag der Anmeldung: 08.06.2016
(73) Patentinhaber: Bayerische Motoren Werke Aktiengesellschaft, 80809 München (DE)
(72) Erfinder: HEIM, Bernhard, 84032 Landshut (DE); HUBER, Stefan, 84155 Bodenkirchen (DE)
(86) Internationale Anmeldenummer: PCT/EP2014/065086
(87) Internationale Veröffentlichungsnummer: WO 2015/014601

(56) Entgegenhaltungen:
- DE-A1-102010 043 401
- DE-U1- 29 511 641
- JP-A- H05 177 658
- JP-A- H07 186 199
- JP-A- S59 129 136
- JP-A- 2005 199 634
- JP-A- 2009 285 943
- JP-A- 2011 218 643
- JP-A- 2012 187 923
- JP-U- H02 144 410
- US-A- 3 660 192

## Beschreibung

Die Erfindung betrifft ein Werkzeug zur Herstellung von faserverstärkten Kunststoffbauteilen im Injektionsprozess, mit einer Aufnahme für ein Kunststoffbauteil, die von einer umlaufenden Dichtung umgeben ist, welche in eine im Werkzeug ausgebildete Nut eingesetzt ist.

Zur Herstellung von faserverstärkten Kunststoffbauteilen im Injektionsprozess werden meistens zweischalige Werkzeuge verwendet. Zur Abdichtung der in dem Werkzeug befindlichen Aufnahme für das Kunststoffbauteil wird eine Dichtung aus einem Elastomer eingesetzt. Bei der Herstellung des Kunststoffbauteils wird Injektionsmaterial in die Aufnahme eingefüllt. Dieses Injektionsmaterial wird aufgrund des Volumenausgleichs gegen die Dichtung gepresst und verformt diese, was wegen der hohen Temperatur des Injektionsmaterials und der Druckbeanspruchung zu kurzen Standzeiten für die Dichtung führt, so dass diese relativ oft ausgetauscht werden muss. Dies wiederum führt zu erheblichen Material- und Rüstkosten und zu einer eingeschränkten Verfügbarkeit des Werkzeugs. Die JP 2012 187923 A, JP 2005 199634 A, DE 10 2010 043401 A1, JP H05 177658 A und JP H07 186199 A zeigen Werkzeuge zur Herstellung von Kunststoffbauteilen.

Der Oberbegriff des Anspruchs 1 geht von der JP 2012 187923 A aus.

Es ist daher Aufgabe der vorliegenden Erfindung, ein Werkzeug zur Herstellung von faserverstärkten Kunststoffbauteilen im Injektionsprozess, mit einer Aufnahme für ein Kunststoffbauteil, die von einer umlaufenden Dichtung umgeben ist, welche in eine im Werkzeug ausgebildete Nut eingesetzt ist, zu schaffen, bei dem eine höhere Standzeit der Dichtung erreicht werden kann.

Diese Aufgabe wird bei einem Werkzeug zur Herstellung von faserverstärkten Kunststoffbauteilen im Injektionsprozess nach Anspruch 1 gelöst.

Infolge der erfindungsgemäßen Ausgestaltung kann Injektionsmaterial in den Aufnahmeraum einfließen, ohne die Dichtung zu verformen und zu beschädigen. Dies erhöht die Standzeit der eingesetzten Dichtung und verringert dadurch den Montageaufwand, so dass die Verfügbarkeit des Werkzeugs gesteigert werden kann.

Die Unteransprüche beinhalten vorteilhafte Weiterbildungen und Ausgestaltungen der Erfindung.

Gemäß einer vorteilhaften Weiterbildung ist der Aufnahmeraum auf der einen Seite von dem Werkzeug und auf der anderen Seite von der Dichtung begrenzt.

Wenn das Werkzeug vorteilhafterweise ein Werkzeugoberteil und ein Werkzeugunterteil aufweist, ist der Aufnahmeraum vorteilhafterweise von dem Werkzeugoberteil, dem Werkzeugunterteil und der Dichtung begrenzt.

Gemäß einer ersten Ausführungsform ist der Aufnahmeraum auf der Werkzeugseite bevorzugt bogenförmig gewölbt.

Gemäß einer bevorzugten Ausgestaltung weist die Dichtung auf der dem Aufnahmeraum zugewandten Seite eine verformbare Wandung auf, die bei geöffnetem Werkzeug im Wesentlichen eben und bei geschlossenem Werkzeug bogenförmig in Richtung auf den Aufnahmeraum gewölbt ist, so dass der Aufnahmeraum eine im Wesentlichen sichelförmige Gestalt annimmt.

Die Dichtung weist vorteilhafterweise auf der zum Aufnahmeraum weisenden Wandung eine Beschichtung aus PTFE (Polytetrafluorethylen) o. dgl. auf. Dies ermöglicht ein einfaches Entfernen von in den Aufnahmeraum eingedrungenem Injektionsmaterial.

Die Dichtung weist gemäß einer bevorzugten Weiterbildung einen kreisförmigen Abschnitt auf, an den sich ein Abschnitt mit zwei parallelen Wänden anschließt, der auf der einen Seite in einen längeren konvexen, an der Wandung endenden Abschnitt und der auf der anderen Seite in einen kürzeren, senkrecht von dem Abschnitt mit den parallelen Wänden abstehenden Abschnitt übergeht, an den sich ein konkaver Bereich anschließt, welcher der Wandung gegenüberliegt, wobei der konkave Bereich und die Wandung auf der dem kreisförmigen Abschnitt gegenüberliegend en Seite über einen Bereich miteinander verbunden sind, der von zwei bogenförmig nach außen gewölbten ungleichmäßig langen Abschnitten gebildet ist.

Die beiden bogenförmig nach außen gewölbten Abschnitte sind bevorzugt über einen relativ kurzen, bogenförmig nach innen gewölbten Abschnitt miteinander verbunden, der dem Mittelpunkt des kreisförmigen Abschnitts gegenüberliegt.

Gemäß einer vorteilhaften Ausgestaltung weist der kreisförmige Abschnitt auf der dem Abschnitt mit den parallelen Wänden gegenüberliegenden Seite eine V-förmige Aussparung auf, die sich bis über den Mittelpunkt des kreisförmigen Abschnitts hinaus erstreckt.

Die Dichtung besteht bevorzugt aus EPDM (Ethylen-Propylen-Dien-Kautschuk), Silikon o. dgl.

Weitere Einzelheiten, Merkmale und Vorteile der Erfindung ergeben sich aus der nachfolgenden Beschreibung anhand der Zeichnungen. Es zeigen:
- Figur 1: eine erste Ausführungsform der Erfindung,
- Figur 2: eine bei der ersten Ausführungsform verwendete Dichtung,
- Figur 3: eine Variante der bei der ersten Ausführungsform verwendeten Dichtung,
- Figur 4: eine zweite Dichtung, und
- Figur 5: ein in Zusammenhang mit der zweiten Dichtung verwendetes Werkzeugunterteil.

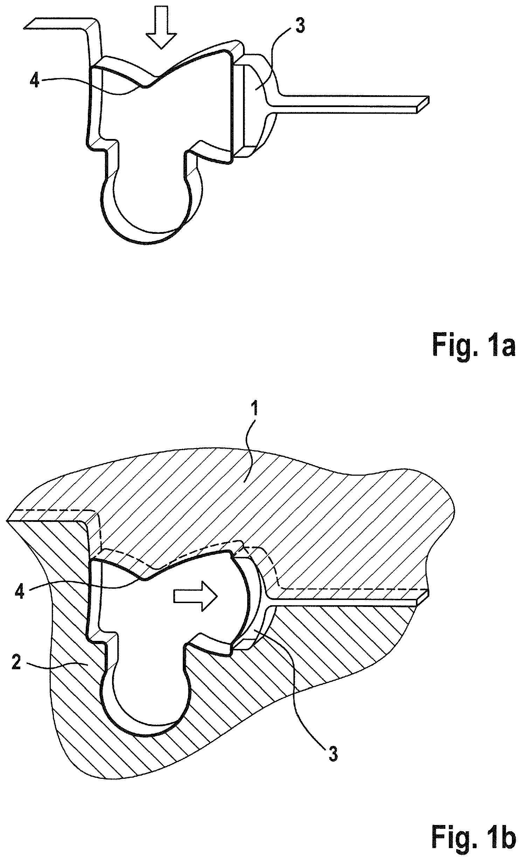

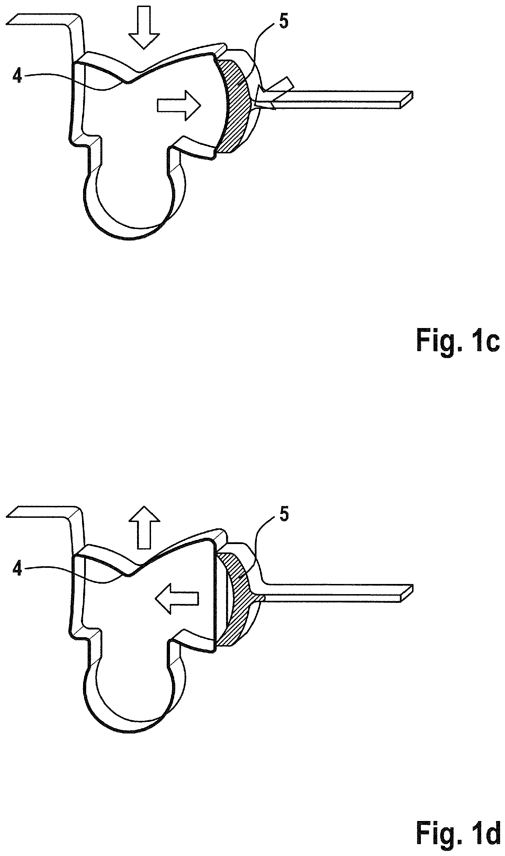

In Figur 1 ist eine erste Ausführungsform der Erfindung dargestellt. Das Werkzeug, zur Herstellung von faserverstärkten Kunststoffbauteilen im
Injektionsprozess ist im Folgenden nur im hier interessierenden Bereich wiedergegeben.

Das Werkzeug weist ein Werkzeugoberteil 1 und ein Werkzeugunterteil 2 sowie einen als Volumenausgleich dienenden Aufnahmeraum 3 auf, der von dem Werkzeugoberteil 1, dem Werkzeugunterteil 2 und einer Dichtung 3 begrenzt ist.

Der Aufnahmeraum 3 ist auf der Werkzeugseite bogenförmig gewölbt. Weiterhin weist die Dichtung 4 auf der dem Aufnahmeraum 3 zugewandten Seite eine verformbare Wandung 4a auf, die bei geöffneten Werkzeug im Wesentlichen eben sein kann und bei geschlossenem Werkzeug bogenförmig in Richtung auf den Aufnahmeraum 4 gewölbt ist, so dass der Aufnahmeraum 3 eine im Wesentlichen sichelförmige Gestalt annimmt (vgl. Figur 1 b).

Die Dichtung 4 ist auf der zum Aufnahmeraum 3 weisenden Wandung 4a mit einer Beschichtung aus PTFE o. dgl. versehen.

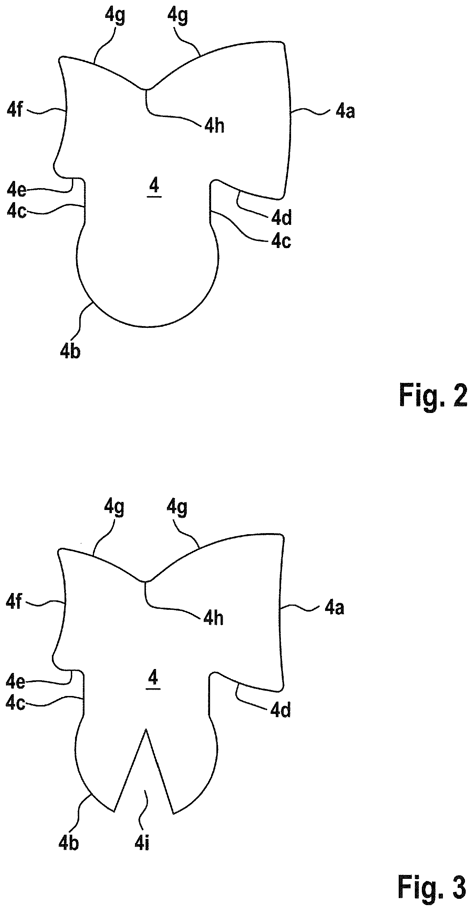

Die Dichtung 4 hat eine in Figur 2 im Einzelnen dargestellte Form. Sie weist einen kreisförmigen Abschnitt 4b auf, an den sich ein Abschnitt mit zwei parallelen Wänden 4c anschließt. Der Abschnitt mit den zwei parallelen Wänden 4c geht auf der einen Seite in einen längeren konvexen, an der Wandung 4a endenden Abschnitt 4d und der auf der anderen Seite in einen kürzeren, senkrecht von dem Abschnitt mit den parallelen Wänden 4c abstehenden Abschnitt 4e übergeht. An den Abschnitt 4e schließt sich ein konkaver Bereich 4f an, welcher der Wandung 4a gegenüberliegt. Der konkave Bereich 4f und die Wandung 4a sind auf der dem kreisförmigen Abschnitt 4b gegenüberliegenden Seite über einen Bereich miteinander verbunden, der von zwei bogenförmig nach außen gewölbten ungleichmäßig langen Abschnitte 4g gebildet ist.

Die beiden bogenförmig nach außen gewölbten Abschnitte 4g sind über einen relativ kurzen, bogenförmig nach innen gewölbten Abschnitt 4h miteinander verbunden, der dem Mittelpunkt des kreisförmigen Abschnitts 4b gegenüberliegt.

Der kreisförmige Abschnitt 4b kann gemäß einer in Figur 3 dargestellten Variante auf der dem Abschnitt mit den parallelen Wänden 4c gegenüberliegenden Seite eine V-förmige Aussparung 4i aufweisen, die sich bis über den Mittelpunkt des kreisförmigen Abschnitts 4b hinaus erstreckt (vgl. Figur 3).

Die Dichtung 4 kann aus EPDM, Silikon o. dgl. bestehen.

Anhand der Figur 1 wird das Wirkprinzip der erfindungsgemäßen Ausgestaltung erläutert.

In Figur 1a wird das Werkzeug geschlossen. Beim Schließen wird ein Druck auf den Abschnitt 4g der Dichtung erzeugt, wodurch sich die Wandung 4a in Richtung auf das Werkzeug verformt und in geschlossenem Zustand des Werkzeugs eine konvexe Ausformung bildet (vgl. Figur 1 b). Zwischen der nunmehr konvexen Wandung 4a einerseits und dem Werkzeugoberteil 1 und dem Werkzeugunterteil 2 andererseits ist nun der sichelförmige Aufnahmeraum 3 ausgebildet, der als Volumenausgleich für das Injektionsmaterial dient.

Gelangt nunmehr Injektionsmaterial 5 in den Aufnahmeraum 3 wird es zwischen der konvexen Wandung 4a, dem Werkzeugoberteil 1 und dem Werkzeugunterteil 2 aufgenommen, ohne die Dichtung 4 zu verformen (vgl. Figur 1c).

Wird das Werkzeug nach ausgehärtetem Injektionsprozess wieder geöffnet, bewegt sich infolge des nachlassenden Drucks der Abschnitt 4g wieder nach oben in seine Ausgangslage. Dies hat zur Folge, dass auch die Wandung 4a wieder in ihre Ausgangslage zurückkehrt und sich dabei von dem Injektionsmaterial 5 löst, so dass dieses nunmehr leicht entfernt werden kann (vgl. Figur 1d).

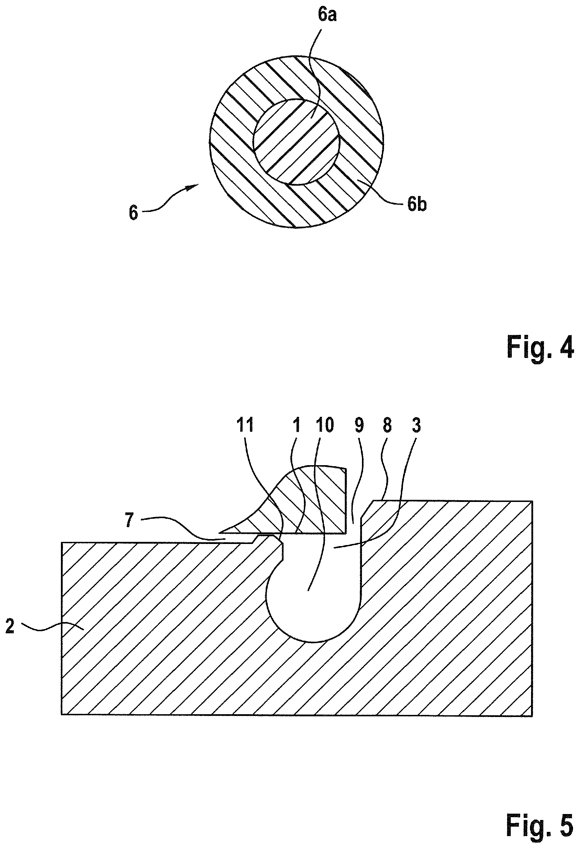

In Figur 4 ist eine Dichtung 6 dargestellt. Diese Dichtung 6 ist als runder oder ovaler Stab ausgebildet, der eine Seele 6a aus einem ersten Material und einen die Seele 6a umgebenden Mantel 6b aus einen zweiten Material aufweist.

Der Mantel 6b kann beispielsweise aus PTFE oder PFA und die Seele 6a aus einem Elastomer, wie Silikon oder EPDM bestehen. Der Durchmesser der Seele 6a entspricht bevorzugt etwa dem halben Durchmesser des Stabes.

In Figur 5 ist ein in Zusammenhang mit der Dichtung 6 gemäß Figur 4 verwendetes Werkzeug dargestellt.

Das Werkzeugunterteil 2 weist auf der der Aufnahme 7 für das Werkstück abgewandten Seite der Dichtung 6 eine Tauchkante 8 auf, welche bei geschlossenem Werkzeug über die Unterkante des Werkzeugoberteils 1 übersteht. Zwischen der Tauchkante 8 und dem Werkzeugoberteil 1 ist ein Spalt 9 ausgebildet. Die Tauchkante 8 verhindert, dass die Dichtung 6 bei der Injektion durch die hohen Drücke abgeschert wird. Der Tauchkantenspalt kann auch als Volumenausgleich für die Dichtung 6 verwendet werden.

Weiterhin ist am Übergang vom Werkzeugunterteil 2 in die die Dichtung 6 aufnehmende Nut 10 eine Fase 11 zur besseren Montierbarkeit der Dichtung 6 vorgesehen.

Der Aufnahmeraum 3 wird ebenfalls zwischen dem Werkzeugoberteil 1, dem Werkzeugunterteil 2 und der Dichtung 6 ausgebildet.

Die vorhergehende Beschreibung der vorliegenden Erfindung dient nur zu illustrativen Zwecken und nicht zum Zwecke der Beschränkung der Erfindung.

### Bezugszeichenliste

- 1: Werkzeugoberteil
- 2: Werkzeugunterteil
- 3: Aufnahmeraum
- 4: Dichtung
- 4a: verformbare Wandung
- 4b: kreisförmiger Abschnitt
- 4c: Abschnitt mit parallelen Wänden
- 4d: Abschnitt
- 4e: Abschnitt
- 4f: konkaver Bereich
- 4g: Abschnitt
- 4h: Abschnitt
- 4i: Aussparung
- 5: Injektionsmaterial
- 6: Dichtung
- 6a: Seele
- 6b: Mantel
- 7: Aufnahme
- 8: Tauchkante
- 9: Spalt
- 10: Nut
- 11: Fase

## Patentansprüche

1. Werkzeug zur Herstellung von faserverstärkten Kunststoffbauteilen im Injektionsprozess, mit einer Aufnahme für ein Kunststoffbauteil, die von einer umlaufenden Dichtung umgeben ist, welche in eine im Werkzeug ausgebildete Nut eingesetzt ist, wobei ein Aufnahmeraum (3) als Volumenausgleich vorgesehen ist, **dadurch gekennzeichnet, dass** die Dichtung (4) einen kreisförmigen Abschnitt (4b) aufweist, an den sich ein Abschnitt mit zwei parallelen Wänden (4c) anschließt, der auf der einen Seite in einen längeren konvexen, an der Wandung (4a) endenden Abschnitt (4d) und der auf der anderen Seite in einen kürzeren, senkrecht von dem Abschnitt mit den parallelen Wänden (4c) abstehenden Abschnitt (4e) übergeht, an den sich ein konkaver Bereich (4f) anschließt, welcher der Wandung (4a) gegenüberliegt, wobei der konkave Bereich (4f) und die Wandung (4a) auf der dem kreisförmigen Abschnitt (4b) gegenüberliegenden Seite über einen Bereich miteinander verbunden sind, der von zwei bogenförmig nach außen gewölbten ungleichmäßig langen Abschnitten (4g) gebildet ist.

2. Werkzeug nach Anspruch 1, **dadurch gekennzeichnet, dass** der Aufnahmeraum (3) auf der einen Seite von dem Werkzeug und auf der anderen Seite von der Dichtung (4, 6) begrenzt ist.

3. Werkzeug nach einem der vorhergehenden Ansprüche, **dadurch gekennzeichnet, dass** das Werkzeug ein Werkzeugoberteil (1) und ein Werkzeugunterteil (2) aufweist und dass der Aufnahmeraum (3) von dem Werkzeugoberteil (1), dem Werkzeugunterteil (2) und der Dichtung (4, 6) begrenzt ist.

4. Werkzeug nach einem der vorhergehenden Ansprüche, **dadurch gekennzeichnet, dass** der Aufnahmeraum (3) auf der Werkzeugseite bogenförmig gewölbt ist.

5. Werkzeug nach einem der vorhergehenden Ansprüche, **dadurch gekennzeichnet, dass** die Dichtung (4) auf der dem Aufnahmeraum (3) zugewandten Seite eine verformbare Wandung (4a) aufweist, die bei geöffneten Werkzeug im Wesentlichen eben und bei geschlossenem Werkzeug bogenförmig in Richtung auf den Aufnahmeraum (3) gewölbt ist, so dass der Aufnahmeraum (3) eine im Wesentlichen sichelförmige Gestalt annimmt.

6. Werkzeug nach einem der vorhergehenden Ansprüche, **dadurch gekennzeichnet, dass** die Dichtung (4) auf der zum Aufnahmeraum (3) weisenden Wandung eine Beschichtung aus PTFE o. dgl. aufweist.

7. Werkzeug nach einem der vorhergehenden Ansprüche, **dadurch gekennzeichnet, dass** die beiden bogenförmig nach außen gewölbten Abschnitte (4g) über einen relativ kurzen, bogenförmig nach innen gewölbten Abschnitt (4h) miteinander verbunden sind, der dem Mittelpunkt des kreisförmigen Abschnitts (4b) gegenüberliegt.

8. Werkzeug nach einem der vorhergehenden Ansprüche, **dadurch gekennzeichnet, dass** der kreisförmige Abschnitt (4b) auf der dem Abschnitt mit den parallelen Wänden (4c) gegenüberliegenden Seite eine V-förmige Aussparung (4i) aufweist, die sich bis über den Mittelpunkt des kreisförmigen Abschnitts (4b) hinaus erstreckt.

9. Werkzeug nach einem der vorhergehenden Ansprüche, **dadurch gekennzeichnet, dass** die Dichtung (4) aus EPDM, Silikon o. dgl. besteht.

## Claims

1. A tool for producing fibre-reinforced plastics material components in the injection process, having a mount for a plastics material component, which mount is surrounded by a peripheral seal which is introduced into a groove formed in the tool, wherein a receiving space (3) is provided as volume compensation, **characterised in that** the seal (4) has a circular portion (4b) which is adjoined by a portion having two parallel walls (4c) which merges on one side into a relatively long, convex portion (4d) which ends at the wall (4a), and merges on the other side into a shorter portion (4e) which projects vertically from the portion having the parallel walls (4c) and is adjoined by a concave region (4f) which is opposite the wall (4a), wherein the concave region (4f) and the wall (4a) are connected together on the side opposite the circular portion (4b) by a region which is formed by two portions (4g) of an unequal length which are curved outwards in the form of an arc.

2. A tool according to claim 1, **characterised in that** the receiving space (3) is delimited on one side by the tool and on the other side by the seal (4, 6).

3. A tool according to any of the preceding claims, **characterised in that** the tool has a tool upper part (1) and a tool lower part (2), and **in that** the receiving space (3) is delimited by the tool upper part (1), by the tool lower part (2) and by the seal (4, 6).

4. A tool according to any of the preceding claims, **characterised in that** the receiving space (3) is curved in the form of an arc on the tool side.

5. A tool according to any of the preceding claims, **characterised in that** the seal (4) on the side facing the receiving space (3) has a deformable wall (4a) which, when the tool is open, is substantially flat and when the tool is closed, is curved in the form of an arc towards the receiving space (3), so that the receiving space (3) assumes a substantially sickle-shaped form.

6. A tool according to any of the preceding claims, **characterised in that** the seal (4) has a coating of PTFE or the like on the wall directed towards the receiving space (3).

7. A tool according to any of the preceding claims, **characterised in that** the two portions (4g) which are curved outwards in the form of an arc are joined together by a relatively short portion (4h) which is curved inwards in the form of an arc and is opposite the centre of the circular portion (4b).

8. A tool according to any of the preceding claims, **characterised in that** the circular portion (4b) has on the side opposite the portion having the parallel walls (4c) a V-shaped opening (4i) which extends over the centre of the circular portion (4b).

9. A tool according to any of the preceding claims, **characterised in that** the seal (4) consists of EPDM, silicone or the like.

## Revendications

1. Moule de fabrication de pièces en matériau synthétique renforcé par des fibres par un procédé d'injection comprenant un logement de réception d'une pièce en matériau synthétique qui est entouré d'un joint d'étanchéité périphérique inséré dans une rainure réalisée dans le moule, une chambre de réception (3) étant prévue en tant qu'élément de compensation de volume,
**caractérisé en ce que**
le joint l'étanchéité (4) comprend un segment circulaire (4b) sur lequel se raccorde un segment ayant deux parois parallèles (4c) qui se prolonge, sur un côté par un segment convexe plus long (4d) se terminant sur une paroi (4a) et sur l'autre côté par un segment (4e) plus court s'écartant perpendiculairement du segment ayant les parois parallèles (4c) et sur lequel se raccorde une zone concave (4f) située à l'opposé de la paroi (4a), la zone concave (4f) et la paroi (4a) étant reliées du côté opposé au segment circulaire (4b) par l'intermédiaire d'une zone qui est formée par deux segments (4g) de différente longueur cintrés en forme d'arc vers l'extérieur.

2. Moule conforme à la revendication 1,
**caractérisé en ce que**
la chambre de réception (3) est limité d'un côté par le moule et de l'autre côté par le joint d'étanchéité (4, 6).

3. Moule conforme à l'une des revendications précédentes,
**caractérisé en ce qu'**
il comporte une partie de moule supérieure (1) et une partie de moule inférieure (2) et la chambre de réception (3) est limitée par la partie supérieure (1) du moule, la partie inférieure (2) du moule et le joint d'étanchéité (4, 6).

4. Moule conforme à l'une des revendications précédentes,
**caractérisé en ce que**
la chambre de réception (3) est cintrée en forme d'arc du côté du moule.

5. Moule conforme à l'une des revendications précédentes,
**caractérisé en ce que**
le joint d'étanchéité (4) comporte sur son côté tourné vers la chambre de réception (3), une paroi déformable (4a) qui, lorsque le moule est ouvert est essentiellement plane et lorsque le moule est fermé est cintrée en forme d'arc en direction de la chambre de réception (3) de sorte que cette chambre de réception (3) prenne une configuration essentiellement en forme de croissant.

6. Moule conforme à l'une des revendications précédentes,
**caractérisé en ce que**
le joint d'étanchéité (4) comporte sur sa paroi tournée vers la chambre de réception (3), un revêtement en PTFE ou similaire.

7. Moule conforme à l'une des revendications précédentes,
**caractérisé en ce que**
les deux segments (4g) cintrés en forme d'arc vers l'extérieur sont reliés par un segment relativement court (4h) cintré en forme d'arc vers l'intérieur qui est situé à l'opposé du centre du segment circulaire (4b).

8. Moule conforme à l'une des revendications précédentes,
**caractérisé en ce que**
le segment circulaire (4b) comporte, sur son côté situé à l'opposé du segment ayant les parois parallèles (4c), un évidement en forme de V (4i) qui s'étend jusqu'au centre du segment circulaire (4b).

9. Moule conforme à l'une des revendications précédentes,
**caractérisé en ce que**
le joint d'étanchéité (4) est réalisé en EPDM, en silicone ou similaire.
